(19) Europäisches Patentamt
European Patent Office
Office européen des brevets

(11) **EP 1 860 653 A1**

(12) **EUROPEAN PATENT APPLICATION**
published in accordance with Art. 158(3) EPC

(43) Date of publication:
**28.11.2007 Bulletin 2007/48**

(51) Int Cl.:
*G11B 7/09* (2006.01)   *G11B 7/135* (2006.01)

(21) Application number: **05785942.3**

(22) Date of filing: **21.09.2005**

(86) International application number:
**PCT/JP2005/017338**

(87) International publication number:
**WO 2006/087843 (24.08.2006 Gazette 2006/34)**

(84) Designated Contracting States:
**DE FR GB**

(30) Priority: **15.02.2005 JP 2005037010**

(71) Applicant: **MATSUSHITA ELECTRIC INDUSTRIAL CO., LTD.**
**Osaka 571-8501 (JP)**

(72) Inventors:
• **ONO, Masayuki,**
**c/o Matsushita Electric Industrial Co., Ltd. IPROC**
**Osaka-shi, Osaka 540-6207 (JP)**

• **NISHIMOTO, Masahiko,**
**c/o Matsushita Electric Industrial Co., Ltd. IPROC**
**Osaka-shi, Osaka 540-6207 (JP)**
• **NAKAMORI, Tatsuya,**
**c/o Matsushita Electric Industrial Co., Ltd. IPROC**
**Osaka-shi, Osaka 540-6207 (JP)**
• **NAKANISHI, Naoki,**
**c/o Matsushita Electric Industrial Co., Ltd. IPROC**
**Osaka-shi, Osaka 540-6207 (JP)**

(74) Representative: **Grünecker, Kinkeldey, Stockmair & Schwanhäusser**
**Anwaltssozietät**
**Maximilianstrasse 58**
**80538 München (DE)**

(54) **OPTICAL PICKUP**

(57)   An optical pickup wherein a main beam and at least two sub-beams are collected on a disc and a tracking error signal is detected from push pull signals generated from each beam. A phase of the push pull signal generated from the first sub-beam is shifted from a phase of the push pull signal generated from the second sub-beam by substantially 180°. A phase difference is given to a part of the first sub-beam (10) and a part of the second sub-beam (11) by a diffraction optical element (2) which generates the first sub-beam (10) and the second sub-beam (11).

FIG. 3

EP 1 860 653 A1

Printed by Jouve, 75001 PARIS (FR)

**Description**

Technical Field

The present invention relates to an optical pickup, and more particularly, to an optical pickup which records, reproduces, and erases information in an information recording medium such as an optical disc.

Background Art

(Background Art 1)

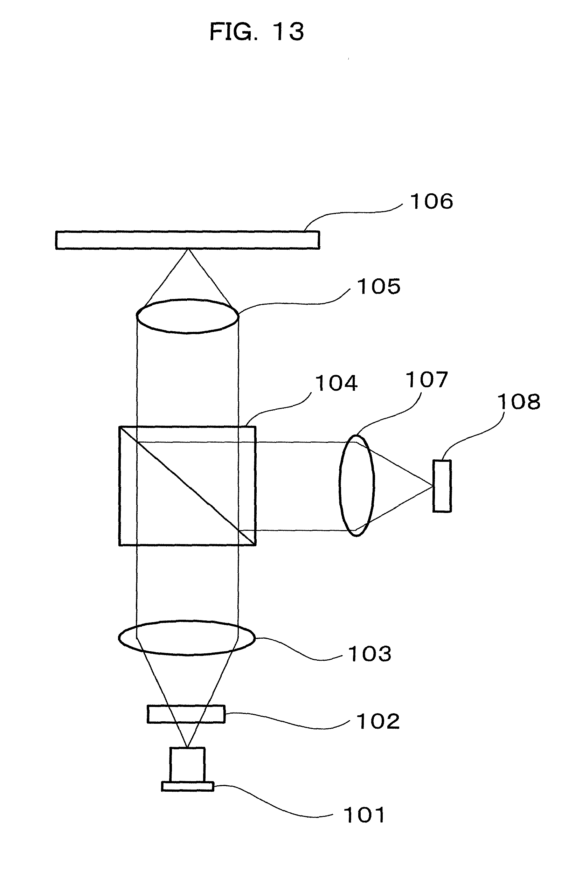

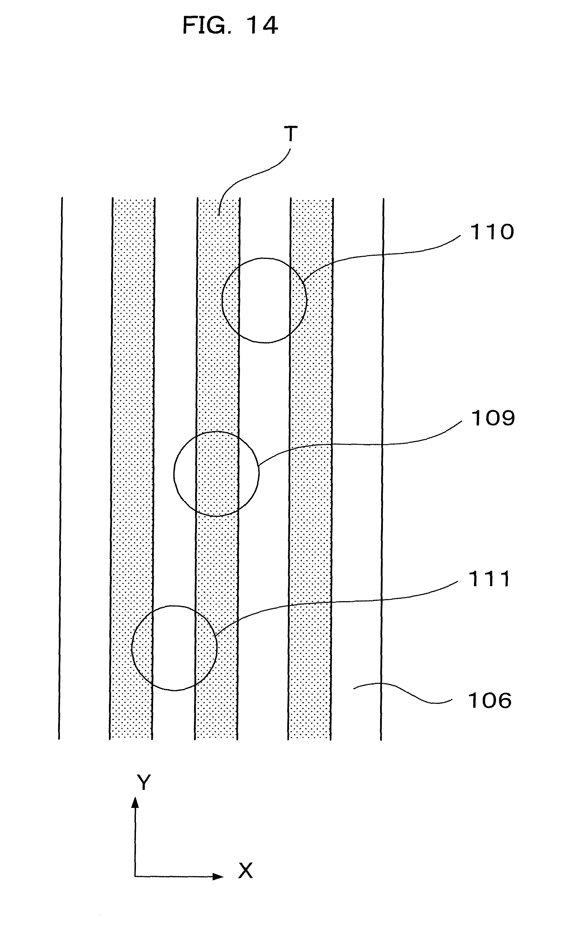

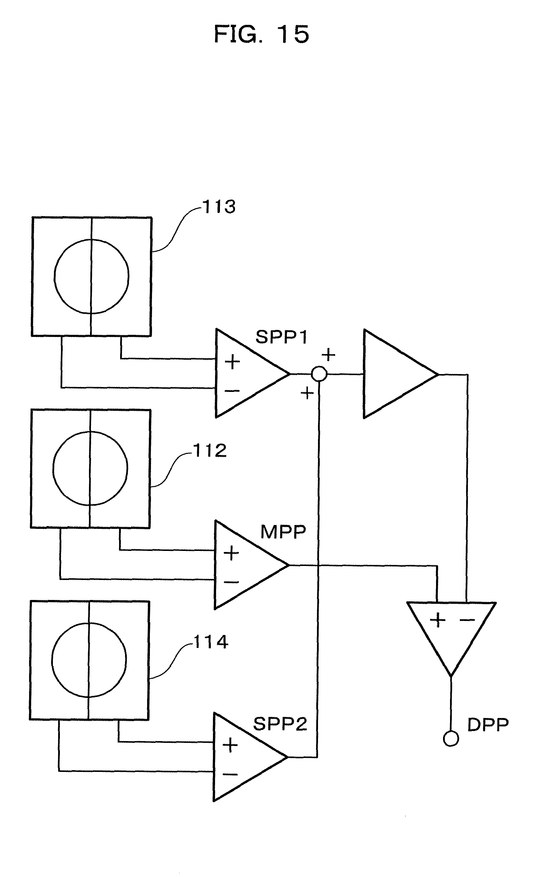

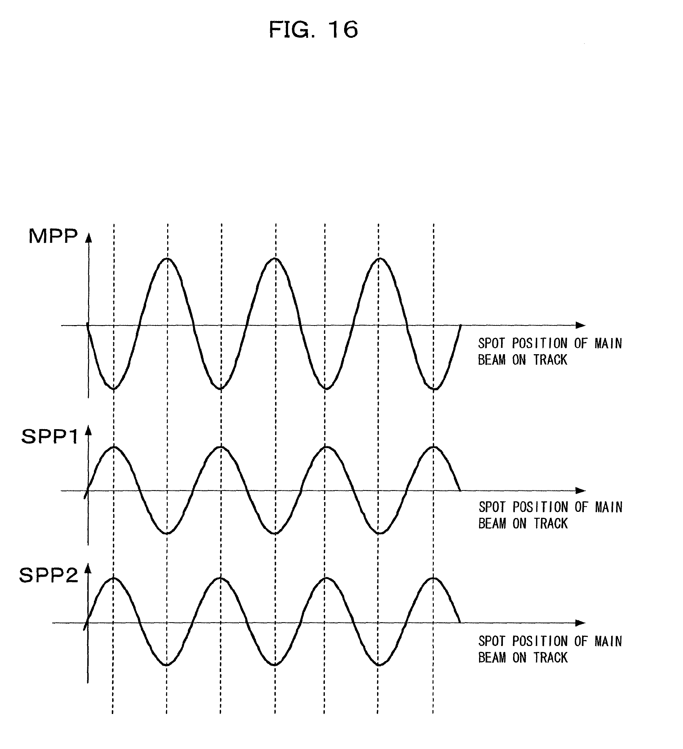

As a method of detecting a tracking error signal in this type of an optical pickup, a differential push-pull method (DPP) using three beams is described in JP-A-61-94246.
The DPP method is described with reference to Fig. 13.
An emitted beam from a semiconductor laser 101 is divided into three beams by a diffractive optical element 102, and the divided beams are concentrated on an optical disc 106 by a collimator lens 103 and an objective lens 105. Reflected beams from the optical disc 106 are reflected by a beam splitter 104, and the beams are guided to an optical detector 108 through a condensing lens 107. As shown in Fig. 14, by using the three beams, a main beam 109, a sub-beam 110 of a + first-order beam, and a sub-beam 111 of a - first-order beam are arranged in a tangential direction to a track on the optical disc 106. In Fig. 14, an X-direction is a perpendicular direction to the track of the optical disc 106 and a Y-direction is a parallel direction to the track of the optical disc 106.
The sub-beams 110, 111 are disposed on a position different in a radial direction by 1/2 track pitch of the track T on which the main beam 109 is concentrated. The two-division optical detectors 112, 113, and 114 having dividing lines parallel to the tracks receive the reflected beams of the main beam 109 and sub-beams 110, 111 as shown in Fig. 15. Then, differential signals of the two-division optical detectors 112, 113, and 114 that are push-pull signals MPP, SPP1, and SPP2 are generated respectively.
As described above, since the sub-beam 110 and the sub-beam 111 are different from the main beam 109 in the radial direction by 1/2 track pitch, the push-pull signals SSP1, SSP2 of the sub-beam 110 and the sub-beam III are out of phase from the push-pull signal MPP of the main beam 109 by 180°, as shown in Fig. 16.
Accordingly, by a circuit in Fig. 15,

$$DPP = MPP - k(SPP1 + SPP2) \quad (1),$$

is calculated, and thus a push-pull signal in which an off-set signal generated due to shift of an objective lens or inclination of a disc is cancelled can be generated. Herein, a coefficient k is given as

$$k = a / (2b) \quad (2)$$

when light intensity of the main beam 109 is a and light intensity of the sub-beam 110, the sub-beam 111 are b.
However, since the DPP method is required to shift the sub-beam 110 and the sub-beam 111 by accurately 1/2 track pitch in a radial direction (X-direction) of the disc from the main beam 109, there is a problem when various types of optical discs with different track pitches are recorded and reproduced by single optical pickup.

(Background Art 2)

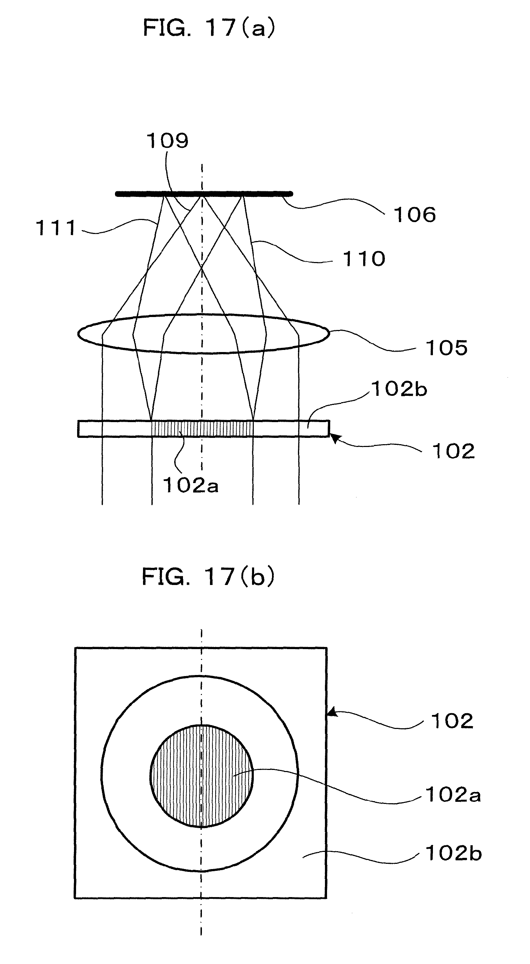

As a means for solving this problem, a method of recording and reproducing an optical disc, which can cancel the push-pull off-set differently from Background Art 1, is proposed in JP-A-10-162383.
This method is described with reference to Fig. 17. A beam emitted from a semiconductor laser which is not illustrated in drawings is divided into three beams by a diffractive optical element 102 and the beams are concentrated on an optical disc 106 by means of an objective lens105. A groove portion 102a of the diffractive optical element 102 is formed only in a center portion of valid light flux. Reference numeral 102b denotes a plat portion, which is formed around the groove portion 102a of the diffractive optical element 102.
According to this configuration, diameters of the sub-beam 110 and the sub-beam 111 generated by the groove portion 102a are smaller than diameter of the valid light flux (an aperture diameter of the objective lens 105). Accordingly, a numerical aperture of the objective lens 105 relative to $\pm$ first-order beams of the diffractive optical element 102 is substantially small. However, since a numerical aperture relative to a zero-order beam of the diffractive optical element 102 is formed larger than the numerical aperture of the objective lens 105, a beam spot of a diffraction limit determined by the numerical aperture of the objective lens 105 is formed on the optical disc 106.

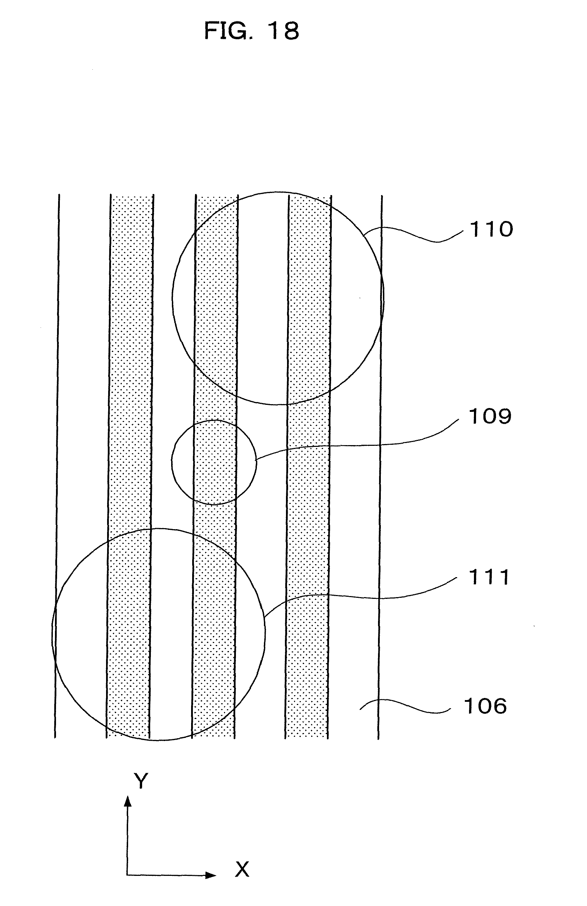

As shown in Fig. 18, when an optical system, in which a proper size of the beam spot of the main beam 109 comparing with the track pitch is formed, is used, beam spot of the sub-beams 110, 111 are formed larger than the track pitch. In order that an optical cut-off frequency determined by an aperture ratio in a radial direction is larger than a spatial frequency of the track pitch, a radius of the groove portion 102a of the diffractive optical element 102 is determined, whereby the tracking error signal (push-pull signal) cannot be obtained from the + first-order beam and the - first-order beam as the sub-beams 110, 111.

However, since the off-set signal is obtained by shift of the objective lens and the like, the off-set can be canceled by calculation of the above-described formula (1). According to this method, since a signal modulated by track crossing is not generated, it is not required to shift the sub-beams 110, 111 in the radial direction of the disc 106 by accurately 1/2 track pitch from the main beam 109 whereby it is possible to reproduce various types of optical discs with different track pitches by the single optical pickup.

Disclosure of the Invention

Problem to be Solved by the Invention

However, when the diffractive optical element 102 in Fig. 17 described is used, as for the main beam 109 including the zero-order beam, the light intensity of the flat portion 102b which is an outer peripheral portion of the diffractive optical element 102 increases relatively since light intensity decreases in the groove portion 102a of the diffractive optical element 102 as much as diffraction efficient value thereof. Furthermore, in regard to the phase of the zero-order beam, an optical phase difference relative to the flat portion 102b is generated in the groove portion 102a. Accordingly, a form of a concentrated beam on the optical disc 106 of the main beam 109 is transformed and thus recording and reproducing characteristics are deteriorated. As a method of solving this problem, there was provided a method of making intensity distribution and a phase difference of the zero-order beam uniform by disposing a diffractive lattice with a diffractive direction different from a diffractive direction the center portion in the flat portion 102b. However, since the diffractive beam of the plat portion is not used (only the zero-order beam is used), the beam is useless.

The invention is contrived to solve the above-mentioned problem, and an object of the invention is to provide a method of suppressing a decrease in use efficiency of light and easily and inexpensively compensating the off-set of the tracking error signal using the push-pull method.

Means for Solving the Problem

In order to accomplish the above-mentioned object, the invention provides the following configurations.

According to a first aspect of the invention, there is provided an optical pickup collecting a main beam and at least two sub-beams on a disc and detecting a tracking error signal from push-pull signals generated from each beam, wherein a phase of the push pull signal generated from the first sub-beam is different from a phase of the push pull signal generated from the second sub-beam by substantially 180°.

According to a second aspect of the invention, the optical pickup may include a diffractive optical element generating the first and second sub-beams and a phase difference is given to the partial portions of the first and second sub-beams by the diffractive optical element.

According to a third aspect of the invention, the first sub-beam is given a phase difference of substantially 90° relative to a half surface divided by a dividing line parallel to a disc track and the second sub-beam is given a phase difference of substantially 90° relative to the opposite half surface other than the half surfaces of the first sub-beam divided by the dividing line, by the diffractive optical element.

According to a fourth aspect of the invention, the diffractive function generating component is not provided in a part of the diffractive optical element through which the main beam passes.

According to a fifth aspect of the invention, the optical pickup includes at least two light sources with different wavelengths, and the diffractive optical element has a periodic structure for generating a main beam and at least two sub-beams from the light beams emitted from each light source, wherein the periodic structure gives the first sub-beam a phase difference of substantially 90° relative to a half surface divided by a dividing line parallel to a disc track and gives the second sub-beam a phase difference of substantially 90° relative to the opposite half surface other than the half surface of the first sub-beam divided by the dividing line, for each light source.

According to a sixth aspect of the invention, there is provided that the diffractive optical element is divided into at least three regions in the radial direction of the disc by the dividing lines parallel to the disc track, the phases of the periodic structures of the divided regions adjacent to each other are different by substantially 90°, and the dividing line passes through the center portion of each sub-beam.

Advantage of the Invention

According to the invention, regarding the plurality of discs with different track pitches, a decrease in use efficiency of light is suppressed and the off-set of the tracking error signal from using the push-pull method can be easily and inexpensively compensated.

Brief Description of the Drawings

[Fig. 1] is a diagram illustrating a configuration of a first embodiment of the optical pickup according to the invention.
[Fig. 2] is a detail diagram illustrating an optical detector in Fig. 1.
[Fig. 3] is a schematic diagram illustrating a periodic structure of a diffractive optical element in Fig. 1.
[Fig. 4] is a schematic diagram illustrating the other periodic structure of a diffractive optical element in Fig. 1.
[Fig. 5] is a diagram illustrating an arrangement of spots on an optical disc by the diffractive optical element in Fig 3.
[Fig. 6] is a diagram illustrating an arrangement of spots on an optical disc by the diffractive optical element in Fig. 4.
[Fig. 7] is a diagram illustrating a signal waveform from the optical detector in Fig. 2.
[Fig. 8] is a diagram illustrating a configuration of a second embodiment of the optical pickup according to the invention.
[Fig. 9] is a schematic diagram illustrating a periodic structure of the diffractive optical element in Fig. 8.
[Fig. 10] is a schematic diagram illustrating the other periodic structure of the diffractive optical element in Fig. 8.
[Fig. 11] is a diagram illustrating an arrangement of spots on the optical disc by the diffractive optical element in Fig. 9.
[Fig. 12] is a diagram illustrating an arrangement of spots on the optical disc by the diffractive optical element in Fig. 10.
[Fig. 13] is a diagram illustrating a configuration of the optical pickup in Background Art 1.
[Fig. 14] is a diagram illustrating an arrangement of spots on the optical disc of the optical pickup in Fig. 13.
[Fig. 15] is a detail diagram illustrating an optical detector of the optical pickup in Fig. 13.
[Fig. 16] is a diagram illustrating a signal waveform from the optical detector in Fig. 13
[Fig. 17a] and [Fig. 17b] are diagrams illustrating a configuration of main parts of the optical pickup in Background Art 2.
[Fig. 18] is a diagram illustrating an arrangement of spots on the optical disc of the optical pickup in Fig. 17.

Best Mode for Carrying Out the Invention

Hereinafter, embodiments of the invention are described.

(First Embodiment)

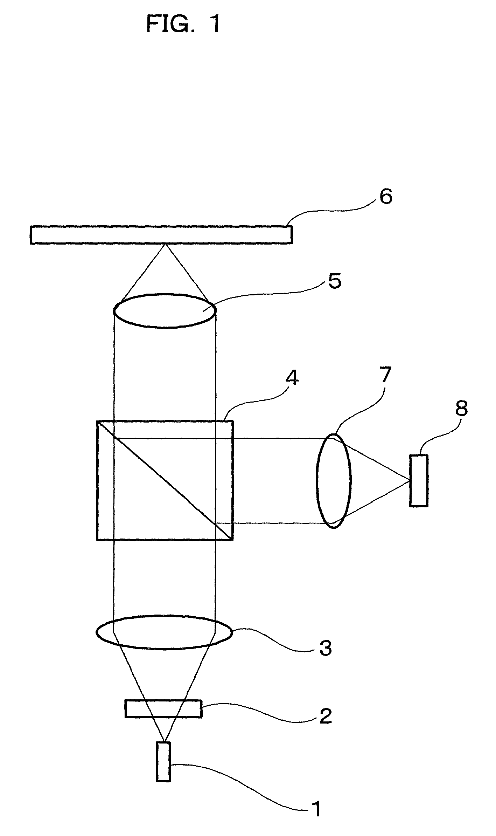

Fig. 1 is a diagram illustrating a configuration of a first embodiment of the optical pickup according to the invention. An emitted beam from a semiconductor laser 1 is divided into a main beam and two sub-beams by a diffractive optical element 2. Then, the divided beams are formed into substantially parallel beams by a collimator lens 3. Then, the beams are concentrated on an optical disc 6 by an objective lens 5. Then, reflected beams are formed again into substantially parallel beams through the objective lens 5. Then the beams are reflected by a beam splitter 4. Then, the beams are guided to an optical detector 8 by a condensing lens 7.

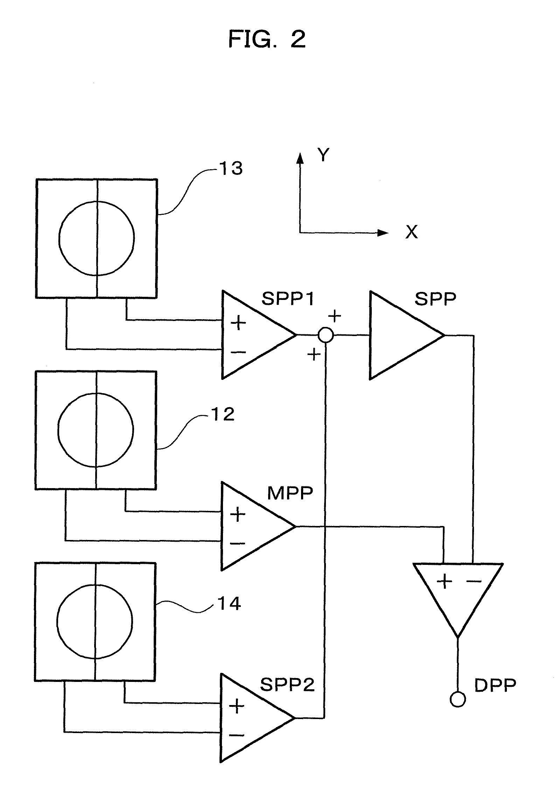

Fig. 2 is a diagram illustrating a configuration of the optical detector 8. The main beam and the two sub-beams are received to two-division optical detectors 12, 13, and 14 having a dividing line parallel in a track direction (Y-direction) respectively. Differential signals, that is, push-pull signals MPP, SPP1, and SPP2 from the two-division optical detectors 12, 13, and 14 are obtained.

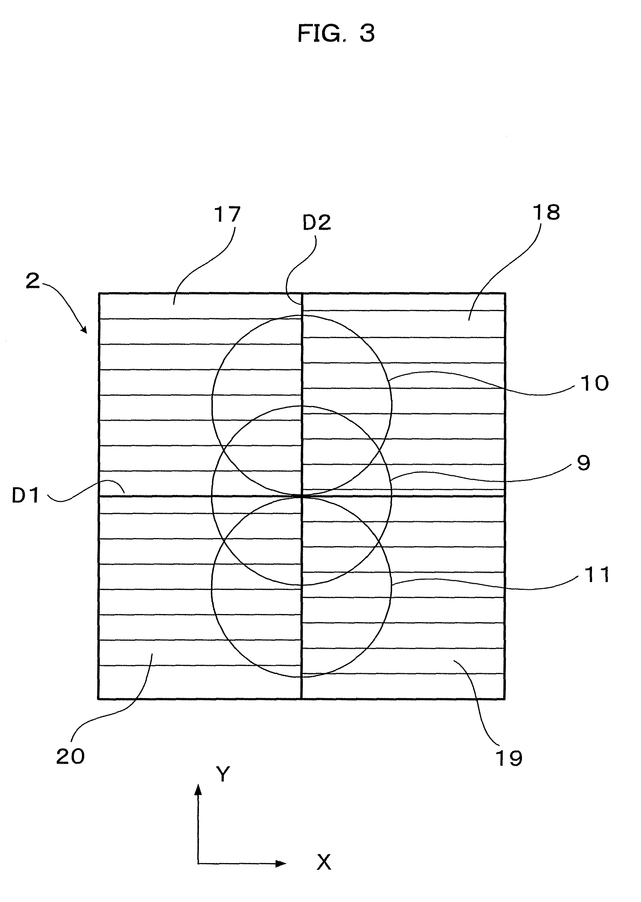

Herein, in the first embodiment, a periodic structure is formed on the diffractive optical element 2. The periodic structure is shown in Fig. 3. The periodic structure of the diffractive optical element 2 is divided into four regions 17 to 20 by a dividing line D1 in a radial direction (X-direction) of the optical disc 6 and a dividing line D2 in a track direction (Y-direction) of the optical disc 6. A phase of the periodic structure of the region 18 adjacent to one region 17 of the regions in the X-direction is different from a phase of the periodic structure of the region 17 by +90°, and a phase of the periodic structure of the region 20 adjacent to the region 19 in the X-direction wherein the region 19 is adjacent to the region 18 in the Y-direction is different from a phase of the periodic structure of the region 19 by +90°.

In Fig. 3, reference numeral 9 denotes the main beam and reference numerals 10, 11 are the sub-beams. The pitch of the periodic structure is set so that one sub-beam 10 of the two sub-beams 10, 11 is generated on only the two regions (i.e. region 17 and region 18) adjacent to each other in the X-direction in Fig. 3 and the other sub-beam 11 is generated on only the other two regions (i.e. region 19 and region 20) adjacent to the two regions 17, 18 in the Y-direction and adjacent to each other in the X-direction. Further, the dividing line D2 in the Y-direction is substantially in the middle of the region for generating the sub-beams.

Accordingly, one sub-beam of two sub-beams generated by the periodic structure has a phase difference of substantially 90° relative to one half surface divided by the dividing line D2 in the Y-direction. The other sub-beam has a phase difference of substantially 90° relative to the opposite half surface other than the one sub-beam of the half surfaces divided by the dividing line D2.

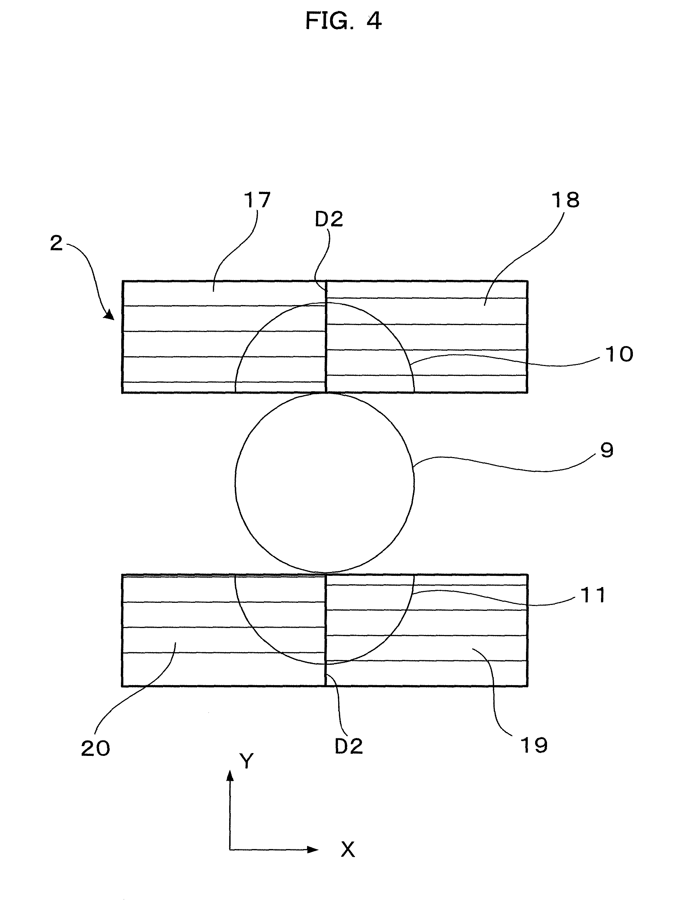

As shown in Fig. 4 on behalf of the configuration of Fig. 3, the regions 17 to 20 generating the sub-beams 10, 11 maybe disposed so that the periodic structure of the region through which the main beam 9 passes is cut and the sub-beams 10, 11 is a non-circle such as substantially a half circle. According to Fig. 4, since loss of light intensity of the main beam 9 is suppressed, use efficiency of the main beam 9 can be improved.

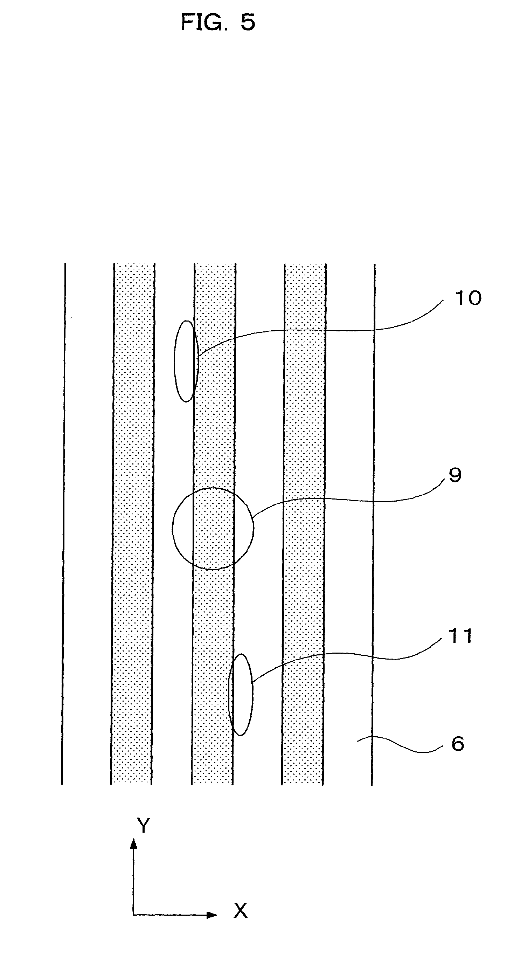

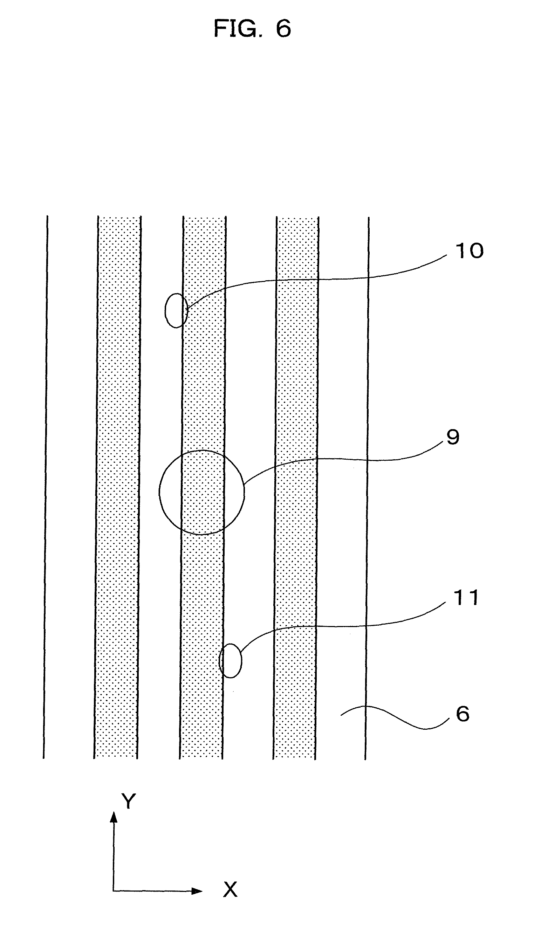

Spots on the optical disc 6 of the main beam 9 and the sub-beams 10, 11 generated by the diffractive optical element 2 in Fig. 3 are as shown in Fig. 5. Further, spots of the optical disc 6 of the main beam 9 and the sub-beam 10, 11 generated by the diffractive optical element 2 in Fig. 4 are as shown in Fig. 6.

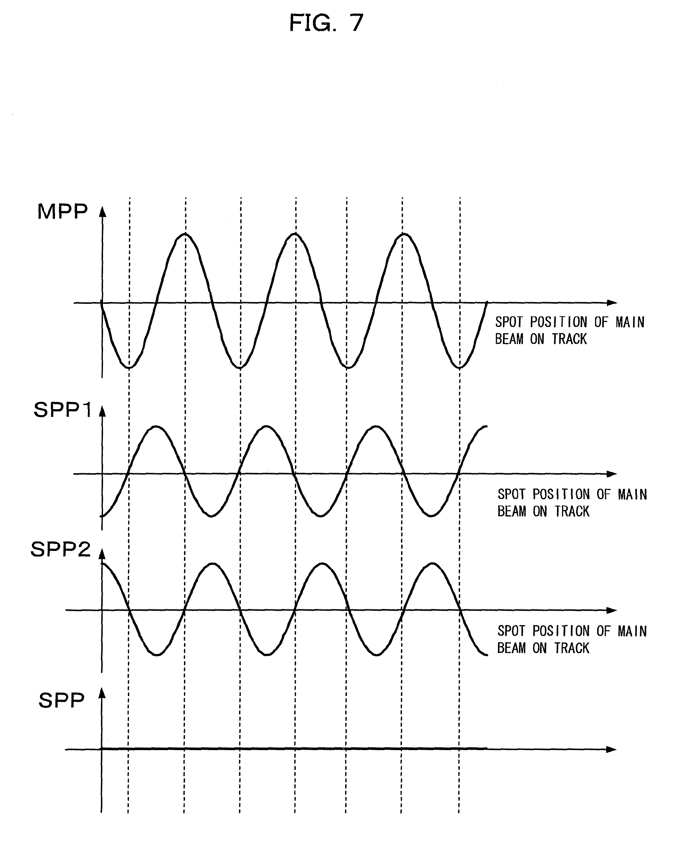

In these cases, the push-pull signals SPP1, SPP2 originated in the sub-beams 10, 11 are out of phase by 180° as shown in Fig. 7. Further, amplitude of the push-pull signal SPP of the sum of the SSP1 and the SSP2 obtained from the circuit of Fig. 2 is substantially zero as shown in Fig. 7.

In addition, in off-set components of MPP, SPP1, and SPP2 generated by a radial shift of the objective lens 5 and/or an inclination of the optical disc 6, the off-set occurs in the same side to the radial shift of the objective lens 5 and/or the inclination of the optical disc 6. Accordingly, by a circuit in Fig. 2,

$$DPP = MPP - k(SPP1+SPP2) \qquad (1)$$

is calculated, whereby the DPP signal in which the off-set is canceled can be detected. Herein, a coefficient k is to compensate differences of light intensity of the main beam 9 and sub-beams 10, 11, the coefficient $k = a / (2b)$ when the intensity ratio of the main beam 9 : the sub-beam 10 : sub-beam 11 equals a : b : b.

As described above, in the diffractive optical element 2, in the periodic structure for generating the sub-beams 10, 11, a straight line structure parallel in the radial direction (X-direction) has a periodicity in the direction (Y-direction) parallel to the track, whereby it is not necessary to shift the sub-beam in the radial direction by accurately 1/2 track pitch from the main beam as Background Art 1. Accordingly, various types of optical discs with the different track pitches can be reproduced by single optical pickup. In addition, the concentrated spot shape of the main beam on the optical disc 6 is not transformed as Background Art 2.

(Second Embodiment)

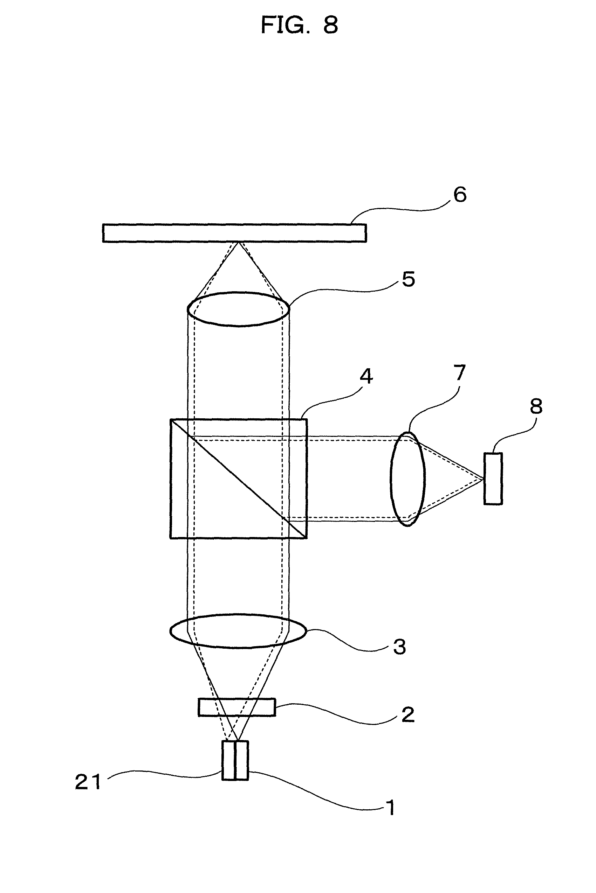

Fig 8 is a diagram illustrating a configuration of the second embodiment of the optical pickup according to the invention. The optical pickup includes two semiconductor lasers 1, 21, with different wavelengths, and emission points of the two semiconductor lasers are adjacent in a radial direction (X-direction). It is proper that the semiconductor lasers 1, 21 are arranged in the narrow area within 200 $\mu$m, for example, along the radial direction of the disc 6. The illustrated optical pickup divides each emitted beam from the two semiconductor lasers 1, 21 into the main beam and the two sub-beams by a diffractive optical element 2 and then the divided beams are formed into substantial parallel beams by a collimator lens 3. Then, the beams are concentrated on an optical disc 6 by an objective lens 5, the reflected beams are formed again into substantial parallel beams through the objective lens 5 and are reflected by a beam splitter 4, and are guided to an optical detector 8 by a condensing lens 7. Herein, the two beams with different wavelengths are illustrated by solid lines and broken lines.

A configuration of the optical detector 8 in Fig. 8 is equal to a configuration illustrated in Fig. 2. The main beam 9, 28 and the two sub-beams 10, 11, 29, and 30, as shown in Fig. 8, are received to two-division optical detector 12, 13, and 14 having a dividing line parallel in the track direction (Y-direction) respectively. The differential signals, that is, the push-pull signals MPP, SPP1, and SPP2 from the two-division optical detectors 12, 13, and 14 are generated.

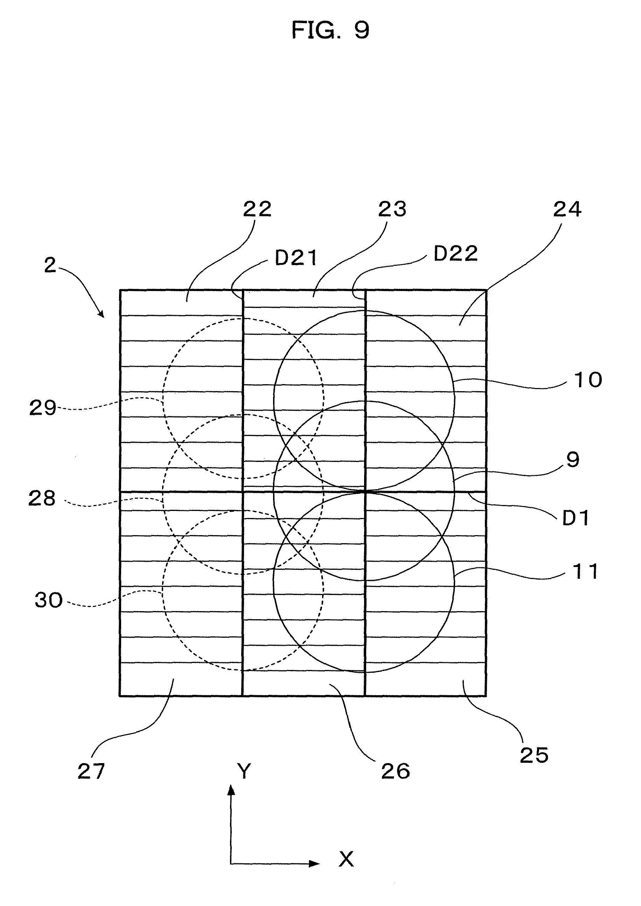

In the second embodiment, a periodic structure is formed on the diffractive optical element 2. The periodic structure is shown in Fig. 9. The periodic structure of the diffractive optical element 2 is divided into six regions 22 to 27 by a dividing line D1 in the radial direction (X-direction) of the optical disc 6 and dividing lines D21 and D22 in the track direction (Y-direction) of the optical disc 6. A phase of the periodic structure of the region 23 adjacent to one region 22 in the X-direction is different from a phase of the periodic structure of the region 22 by +90°, and a phase of the periodic structure of the other region 24 adjacent to the region 23 in X-direction is different from a phase of the periodic structure of the region 23 by -90°. A phase of the periodic structure of the region 26 adjacent to the region 27 in the X-direction wherein the region 27 is adjacent to the region 22 in the Y-direction is different from a phase of the periodic structure of the region 27 by -90°, and a phase of the periodic structure of the other region 25 adjacent to the region 26 in the X-direction is different from a phase of the periodic structure of the region 26 by +90°. Or, it is possible that a phase of the periodic structure of the region 24 is different from a phase of the periodic structure of the region 23 by +90° and a phase of the periodic structure of the region 25 is different from a phase of the periodic structure of the region 26 by -90°.

Consequently, one side sub-beams 10, 29 of the two side sub-beams 10, 11, 29, and 30 generated from the emitted beams from the two semiconductor lasers 1, 21 are generated on only the two regions 23, 24 and the two regions 22, 23 adjacent to each other in the X-direction. The pitch of the periodic structure is set so that the other side sub-beams 11, 30 are generated on only the two regions 25, 26 and the two regions 26, 27 adjacent to the two regions 23, 24 and the two regions 23, 22 in the Y-direction and adjacent to each other in the X-direction. The dividing line D1 in the X-direction is substantially in the middle of the region for generating the sub-beam.

Accordingly, one sub-beam of the two sub-beams generated by the periodic structure relative to emitted beams from the two semiconductor lasers 1, 21 has a phase difference of substantially 90° relative to one half surface divided by the dividing lines D21, D22 in the Y-direction, and the other sub-beam has a phase difference of substantially 90° relative to the opposite half surface other than one sub-beam of the half surfaces divided by the dividing lines D21, D22.

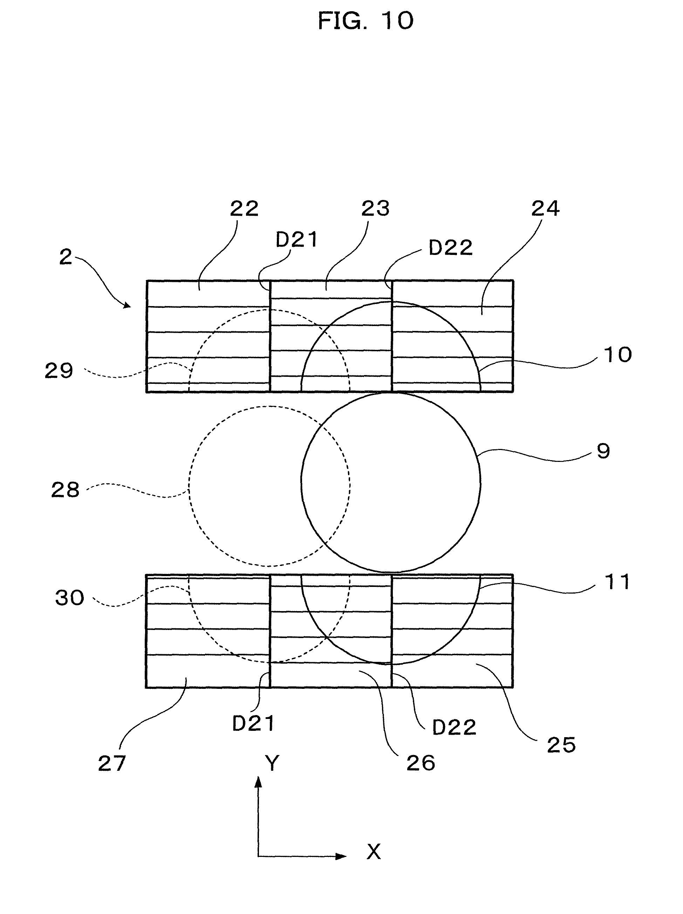

In addition, as shown in Fig. 10 on behalf of the configuration of Fig. 9, the region 22 to 27 for generating the sub-beams 10, 11, 29, and 30 may be disposed so that the sub-beams 10, 11, 29, and 30 are non-circles such as half circles by cutting the periodic structure of the region through which the main beam 9, 28 passes. According to Fig. 10, since loss of light intensity of the main beam 9, 28 is suppressed, use efficiency of the main beam 9, 28 can be improved.

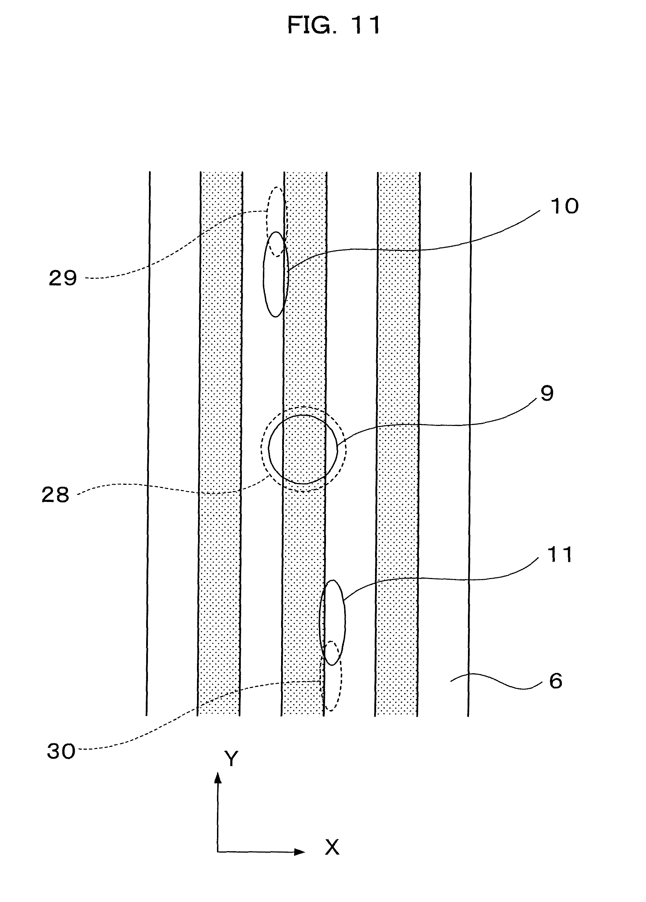

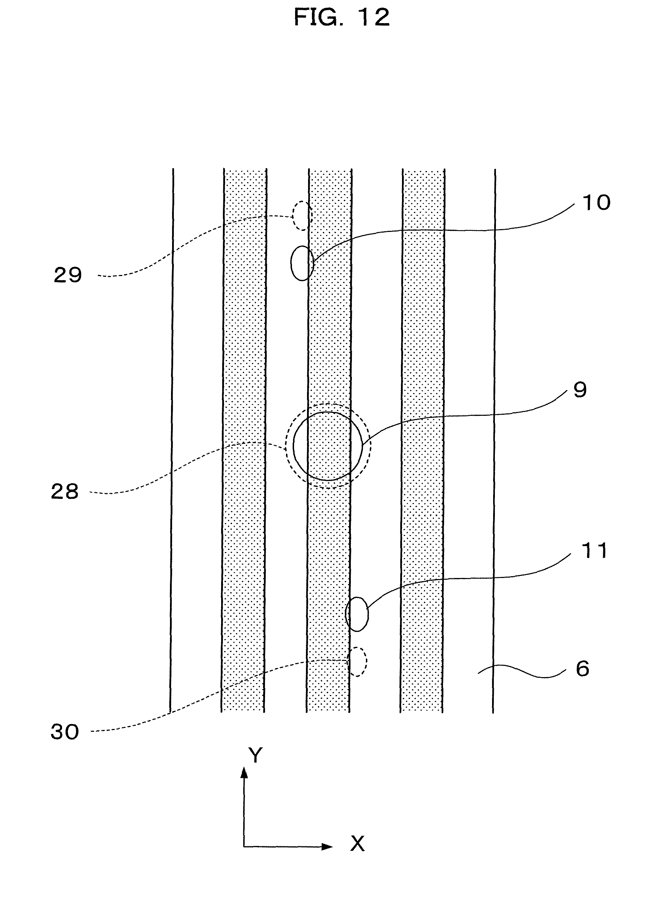

Spots on the optical disc 6 of the main beam 9, 28 and sub-beams 10, 11, 29, and 30 generated by the diffractive optical element 2 in Fig. 9 are as shown in Fig. 11. Further, spots on the optical disc 6 of the main beam 9, 28 and sub-beams 10, 11, 29, and 30 generated by the diffractive optical element 2 of Fig. 10 are as shown in Fig. 12. In these cases, the push-pull signals SPP1 and SPP2 by using the sub-beams 10, 11 or the sub-beams 29, 30 are out of phase by 180° as shown in Fig. 7, and amplitude of the push-pull signal of the sum of the SPP1 and the SPP2 is substantially zero.

Meanwhile, in off-set components of MPP, SPP1, and SPP2 by a radial shift of the objective lens 5 and/or an inclination of the optical disc 6 in Fig. 8, the off-set occurs in the same side (the same phase) to the radial shift of the objective lens 5 and/or the inclination of the optical disc 6. Accordingly, by a circuit in Fig. 2,

$$DPP = MPP - k(SPP1 + SPP2) \qquad (1)$$

is calculated, whereby the DPP signal in which the off-set is canceled can be detected. Herein, a coefficient k is to compensate differences of light intensity of the main beam 9, 28 and sub-beams 10, 11, 29 and 30, the coefficient k = a / (2b) when the intensity ratio of the main beam 9 : the sub-beam 10 : sub-beam 11 and the main beam 28 : the sub-beam 29 : sub-beam 30 equals a : b : b.

In the diffractive optical element 2, regarding the periodic structure for generating the sub-beams 10, 11, 29, and 30, a straight line structure parallel in the radial direction (X-direction) has a periodicity in the direction (Y-direction) parallel to the track, whereby it is not necessary to shift the sub-beam in the radial direction by accurately 1/2 track pitch from the main beam as Background Art 1. Accordingly, various types of optical discs with the different track pitches can be reproduced by single optical pickup. In addition, the concentrated spot shape of the main beam on the optical disc 6 is not transformed as Background Art 2.

As described above, the emission points of the semiconductor lasers 1, 21 having different wavelengths are arranged in the narrow region within 200μm, for example, along the radial direction of the disc, the regions 22, 23, and 24 or the regions 25, 26, and 27 generating the phase difference by 90° are disposed in the radial direction of the disc by turns in the diffractive optical element 2 and the center regions 23, 26 are shared by the beams with the two wavelengths. Consequently, it is not necessary to shift the sub-beams in the radial direction by accurately 1/2 pitch from the main beam as Background Art 1, and various types of optical discs with different track pitches can be reproduced by single optical pickup, and the optical pickup which do not transform the concentrated spot shape of the main beam on the optical disc 6 as Background Art 2 can be easily accomplished.

Moreover, in the optical pickup in which three or more emission points of the semiconductor laser with different wavelengths are arranged, the region generating phase difference by 90° may be disposed in the diffractive optical element 2 in the radial direction of the disc by turns so that the same effects can be obtained.

Industrial Applicability

The optical pickup according to the invention suppresses a decrease in use efficiency of light, can easily and inexpensively compensate the off-set of the tracking error signal from using the push-pull method, and can be effectively used in the plurality of discs with different track pitches.

**Claims**

1.  An optical pickup collecting a main beam and at least two sub-beams on a disc and detecting a tracking error signal from push-pull signals generated from each beam, wherein a phase of the push pull signal generated from the first sub-beam is different from a phase of the push pull signal generated from the second sub-beam by substantially 180°.

2.  The optical pickup according to Claim 1, wherein the optical pickup includes a diffractive optical element generating the first and second sub-beams and a phase difference is given to the partial portions of the first and second sub-beams by the diffractive optical element.

3.  The optical pickup according to Claim 2, wherein the first sub-beam is given a phase difference of substantially 90° relative to a half surface divided by a dividing line parallel to a disc track and the second sub-beam is given a phase difference of substantially 90° relative to the opposite other than the half surfaces of the first beam divided by the dividing line, by the diffractive optical element.

4.  The optical pickup according to Claim 2, wherein the diffractive function generating component is not provided in a part of the diffractive optical element through which the main beam passes.

5.  The optical pickup according to Claim 2, the optical pickup comprising:

    at least two light sources with different wavelengths, wherein
    the diffractive optical element has a periodic structure for generating a main beam and at least two sub-beams from the light beams emitted from each light source, and
    wherein the periodic structure gives the first sub-beam a phase difference of substantially 90° relative to a half surface divided by a dividing line parallel to a disc track and gives the second sub-beam a phase difference of substantially 90° relative to the opposite half surface other than the half surface of the first sub-beam divided by the dividing line, for each light source.

6.  The optical pickup according to Claim 5, wherein the diffractive optical element is divided into at least three regions in the radial direction of the disc by the dividing lines parallel to the disc track, the phases of the periodic structures of the divided regions adjacent each other are different by substantially 90°, and the dividing line passes through the center portion of each sub-beam.

# FIG. 1

# FIG. 2

# FIG. 3

# FIG. 4

# FIG. 5

# FIG. 6

# FIG. 7

MPP

SPOT POSITION OF MAIN
BEAM ON TRACK

SPP1

SPOT POSITION OF MAIN
BEAM ON TRACK

SPP2

SPOT POSITION OF MAIN
BEAM ON TRACK

SPP

## FIG. 8

# FIG. 9

# FIG. 10

# FIG. 11

# FIG. 12

# FIG. 13

106

105

104    107    108

103

102

101

# FIG. 14

# FIG. 15

FIG. 16

## FIG. 17(a)

## FIG. 17(b)

# FIG. 18

## INTERNATIONAL SEARCH REPORT

| | International application No. |
|---|---|
| | PCT/JP2005/017338 |

A. CLASSIFICATION OF SUBJECT MATTER
*G11B7/09*(2006.01), *G11B7/135*(2006.01)

According to International Patent Classification (IPC) or to both national classification and IPC

B. FIELDS SEARCHED

Minimum documentation searched (classification system followed by classification symbols)
*G11B7/09*(2006.01)-*G11B7/22*(2006.01)

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho   1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 11-296879 A  (Sony Corp.),<br>29 October, 1999 (29.10.99),<br>Par. Nos. [0018] to [0023]; Figs. 5 to 7<br>(Family: none) | 1<br>2,4<br>3,5,6 |
| X<br>Y<br>A | JP 7-320287 A  (Olympus Optical Co., Ltd.),<br>08 December, 1995 (08.12.95),<br>Par. Nos. [0014] to [0045]; Figs. 1 to 2<br>(Family: none) | 1<br>2,4<br>3,5,6 |
| Y<br>A | JP 2003-162831 A  (Sharp Corp.),<br>06 June, 2003 (06.06.03),<br>Par. Nos. [0010] to [0020]; Figs. 1 to 3<br>(Family: none) | 2<br>3,5,6 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 December, 2005 (15.12.05) | 27 December, 2005 (27.12.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2005/017338 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2001-250250 A  (Sharp Corp.),<br>14 September, 2001 (14.09.01),<br>Par. Nos. [0093] to [0110]; Figs. 9 to 13<br>(Family: none) | 2<br>3,5,6 |
| Y | Microfilm of the specification and drawings<br>annexed to the request of Japanese Utility<br>Model Application No. 31512/1987(Laid-open<br>No. 138625/1988)<br>(Sony Corp.),<br>13 September, 1988 (13.09.88),<br>Full text; Figs. 1 to 5<br>(Family: none) | 4 |
| P,A | JP 2005-182938 A  (Matsushita Electric<br>Industrial Co., Ltd.),<br>07 July, 2005 (07.07.05),<br>Par. Nos. [0026] to [0061]; Figs. 1 to 12<br>(Family: none) | 4-6 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61094246 A
- JP 10162383 A